# EUROPÄISCHE PATENTSCHRIFT

(11) **EP 2 606 621 B1**
(45) Veröffentlichungstag und Bekanntmachung des Hinweises auf die Patenterteilung: **22.03.2017**
(21) Anmeldenummer: 11740670.2
(22) Anmeldetag: 05.08.2011
(51) Int. Cl.: H04L 29/06, B60R 25/24, G08C 17/02, G07C 9/00

(54) **VERFAHREN ZUM BEREITSTELLEN EINES DRAHTLOSEN FAHRZEUGZUGANGS**
METHOD FOR PROVIDING WIRELESS VEHICLE ACCESS
PROCÉDÉ DE FOURNITURE D'UN ACCÈS SANS FIL À UN VÉHICULE

(30) Priorität: 01.09.2010 DE 102010037271; 16.08.2010 DE 102010037013
(43) Veröffentlichungstag der Anmeldung: 26.06.2013
(73) Patentinhaber: Huf Hülsbeck & Fürst GmbH & Co. KG, 42551 Velbert (DE)
(72) Erfinder: MÖNIG, Stefan, 58332 Schwelm (DE); SCHRÖTER, Veit, 32312 Lübbecke (DE)
(74) Vertreter: Zenz Patentanwälte Partnerschaft mbB
(86) Internationale Anmeldenummer: PCT/EP2011/063551
(87) Internationale Veröffentlichungsnummer: WO 2012/022637

(56) Entgegenhaltungen:
- EP-A2- 0 913 979
- EP-A2- 1 281 588

## Beschreibung

Die Erfindung betrifft ein Verfahren zur Einrichtung eines drahtlosen Fahrzeugzugangs. Insbesondere betrifft die Erfindung ein Verfahren, bei welchem Berechtigungen zum drahtlosen Fahrzeugzugang von einem dem Fahrzeug zugeordneten ID-Geber auf ein separates Gerät übertragen werden.

Bei den meisten Kraftfahrzeugen ist heute ein Zugriff auf Funktionen des Kraftfahrzeuges, z.B. ein Entsperren einer Tür oder eine Freigabe zum Start des Fahrzeuges mit möglich, indem eine drahtlose Kommunikation zwischen Autorisierungs- oder Berechtigungsmitteln, z.B. einem ID-Geber, und einer fahrzeugseitigen Steuereinrichtung durchgeführt wird.

Ein vom zugreifenden Benutzer des Fahrzeuges mitgeführtes Gerät enthält dabei Identifikationsdaten, welche vom Fahrzeug über eine Funkverbindung abgefragt werden können und den Benutzer als rechtmäßigen Benutzer legitimieren. Wird auf diese Weise die Zugriffsberechtigung geprüft, können unterschiedliche Fahrzeugfunktionen freigegeben oder gesperrt werden, ohne dass der Benutzer aktiv einzugreifen braucht.

Grundsätzlich ist außerdem der Wunsch bekannt, dass Benutzer von Kraftfahrzeugen im Alltag möglichst wenig durch die mitgeführten Geräte und Schlüssel für die Kraftfahrzeuge belastet werden möchten. Andererseits stellen die Fahrzeugschlüssel und deren Funktionalitäten praktische Hilfsmittel für Fahrzeugbesitzer dar, insbesondere in Spezialfällen (z.B. Batterie der Sendeeinrichtung leer oder kurzzeitige Berechtigung eines Dritten zum Zugriff aus das Fahrzeug).

Es besteht daher der Wunsch auf Seiten der Kraftfahrzeugführer, einzelne Funktionen des Kraftfahrzeuges oder z.B. die Alltagsfunktion des Kraftfahrzeuges über Verwendung von Geräten zu legitimieren, die vom Benutzer ohnehin mitgeführt werden. Dies können beispielsweise Mobiltelefone sein. Gleichzeitig ist jedoch jederzeit sicherzustellen, dass die sicherheitsrelevanten Aspekte Beachtung finden, wonach eine Kopie eines Fahrzeugschlüssels bzw. ID-Gebers mit allgemein zugänglichen Mitteln und ohne vertrauenswürdige Autorisierungsstelle unterbunden wird.

Dokument EP1281588 offenbart Übertragen eines Öffnungscodes für ein Kraftfahrzeug an ein Handy. Das Kennzeichen des Kraftfahrzeugs wird über die Bluetooth-Schnittstellen vom Schloss zum Handy übertragen. Dann wird eine Mobilfunkverbindung zwischen dem Handy und dem Diensterbringungsrechner aufgebaut, der an Hand des Kennzeichens einen Öffnungscode bestimmt und zum Handy überträgt. Das Handy überträgt seinerseits den Öffnungscode über die Bluetooth-Schnittstellen zum Schloss. Nach dem Empfang des Öffnungscodes wird das Schloss entriegelt.

Aufgabe der Erfindung ist es, die Bedienung und Autorisierung von Kraftfahrzeugfunktionen durch verfügbare Kommunikationseinrichtungen zu erleichtern.

Diese Aufgabe wird erfindungsgemäß gelöst durch das Verfahren mit den Merkmalen des Patentanspruchs 1.

Gemäß dem Verfahren zum Bereitstellen eines drahtlosen Fahrzeugzugangs wird erfindungsgemäß zunächst eine Verbindung zwischen einem dem Kraftfahrzeug zugeordneten ID-Geber und einer drahtlosen Kommunikationseinrichtung aufgebaut. Die drahtlose Kommunikationseinrichtung kann eine beliebige Kommunikationseinrichtung sein, z.B. ein Mobiltelefon. Sie muss lediglich die auf den Fahrzeugschlüssel abgestimmten Kommunikationsmittel mitbringen, um eine Funkverbindung zwischen ID-Geber und Kommunikationseinrichtung aufzubauen. Für den Aufbau der Verbindung werden entweder gängige Protokolle und im Kommunikationsgerät vorhandene Programme abgearbeitet oder es werden spezielle Programme auf der Kommunikationseinrichtung zur Verfügung gestellt, um die Kommunikation abzuwickeln. Dazu können beispielsweise Anwendungen bzw. Applikationen auf die Kommunikationseinrichtung geladen werden, welche für die Kommunikation mit geeigneten ID-Gebern programmiert sind. Im Rahmen der Kommunikation wird eine in dem ID-Geber gespeicherte Identifikationskennung vom ID-Geber an die Kommunikationseinrichtung übertragen. Diese gespeicherte Identifikationskennung kennzeichnet den ID-Geber und identifiziert ihn eindeutig. Die Identifikationskennung kann im ID-Geber verschlüsselt vorliegen und außerdem über eine verschlüsselte Verbindung an die drahtlose Kommunikationseinrichtung übertragen werden. Weiterhin kann die im ID-Geber verschlüsselte Identifikationskennung auch in weiterhin verschlüsselter Form an die Kommunikationseinrichtung übermittelt werden, so dass sie in der Kommunikationseinrichtung gar nicht entschlüsselt oder entschlüsselbar vorliegt.

Anschließend wird eine Verbindung über ein herkömmliches öffentliches Kommunikationsnetzwerk zwischen der Kommunikationseinrichtung und einem Dienstanbieter/Serviceprovider bzw. einer bereitgestellten Schnittstelle des Dienstanbieters aufgebaut. Diese Verbindung kann sowohl über ein Mobilfunknetz als auch z.B. das Internet aufgebaut werden. Der Serviceprovider stellt auf seiner Seite Dienste und Geräte bereit, die jederzeit für den Aufbau einer Verbindung ansprechbar sind. Unter einem Serviceprovider sind in diesem Zusammenhang alle Arten von organisierten Einrichtungen zu verstehen, welche die Entgegennahme und Verarbeitung der übertragenen Daten erlauben.

Nach Aufbau der Verbindung wird die erste Identifikationskennung, welche von dem ID-Geber an das Kommunikationsgerät übertragen wurde, an den Serviceprovider übertragen. Außerdem wird eine weitere Identifikationskennung an den Serviceprovider gesendet, welche ihrerseits die drahtlose Kommunikationseinrichtung identifiziert und eindeutig kennzeichnet.

Beide Identifikationskennungen können verschlüsselt übertragen werden, um auf dem Transportweg einen Zugriff auf die Daten durch Unbefugte unterbinden zu können. Wurde die Identifikationskennung vom ID-Geber bereits verschlüsselt an die Kommunikationseinrichtung übertragen, so kann diese die verschlüsselte Identifikationskennung zusätzlich verschlüsseln oder in der ursprünglichen Verschlüsselung weiterleiten, die Kommunikationseinrichtung braucht zu diesem Zeitpunkt also gar nicht in Kenntnis der wahren Identifikationskennung zu gelangen, obwohl dies ebenfalls möglich sein kann.

Auf Seiten des Serviceproviders wird die Identifikationskennung des ID-Gebers einer Echtheits- und Plausibilitätsprüfung unterzogen. Dazu kann der Serviceprovider auf einen Datenbestand zurückgreifen, welcher Informationen zu den Identifikationskennungen der ID-Geber enthält. In derartigen Datenbanken sind die Verknüpfungen zwischen ID-Gebern und den zugehörigen Fahrzeugen gespeichert.

Anhand der übermittelten Daten erzeugt das System des Serviceproviders durch ein Berechnungsverfahren eine mehrteilige Autorisierungsnachricht. Diese Autorisierungsnachricht berücksichtigt sowohl die Identifikationskennung der mobilen drahtlosen Kommunikationseinrichtung, als auch die Identifikationskennung des ID-Gebers. Die mehrteilige Autorisierungsnachricht trägt demnach in sich eine Verknüpfung dieser beiden Identifikationskennungen.

Die Autorisierungsnachricht enthält Daten, die für eine Freigabe der Zugriffsrechte auf der drahtlosen Kommunikationseinrichtung von Seiten des Kraftfahrzeuges erforderlich sind. Teile dieser mehrteiligen Autorisierungsnachricht werden an die drahtlose Kommunikationseinrichtung zurück übermittelt, wobei eine beliebige Art der Verbindungswege genutzt werden kann. Insbesondere kann das bereits genutzte öffentliche Kommunikationsnetzwerk verwendet werden, welches bereits für den Transport der Daten zu der Einrichtung benutzt wurde.

Ein anderer Teil der Daten wird an eine Steuereinrichtung in dem Kraftfahrzeug übermittelt. Die Autorisierungsnachricht wird daher in mehreren Teilen auf zwei verschiedenen Wegen an zwei verschiedene Zielpositionen übermittelt. Dabei können die übermittelten Teile an die jeweiligen Zielpositionen abschnittsweise übereinstimmen, also eine Datenschnittmenge aufweisen. Alternativ können auch gänzlich unterschiedliche Datenteile übermittelt werden. Die Übermittelung der Teile der Autorisierungsnachricht an das Kraftfahrzeug bzw. die Steuereinrichtung in dem Kraftfahrzeug erfolgt über einen beliebigen Weg der Kommunikation. Ist das Kraftfahrzeug mit einem eigenen Kommunikationsmittel geeigneter Form ausgerüstet, kann die Übertragung unmittelbar erfolgen. Alternativ kann jedoch auch eine Übertragung durch Zwischenschaltung einer vertrauenswürdigen Stelle erfolgen. So kann z.B. der Teil der Autorisierungsnachricht, welcher für die Steuereinrichtung in dem Kraftfahrzeug bestimmt ist, an eine wählbare Werkstatt oder einen Fahrzeughändler oder eine sonstige vertrauenswürdige Stelle übermittelt werden (z.B. Tankstelle), bei welcher der Benutzer vorstellig werden muss, um die Übertragung dieser Teile der Autorisierungsnachricht auf sein Kraftfahrzeug vornehmen zu lassen. Dieser Schritt kann dann mit einer weiteren Verifikationsprüfung hinsichtlich der Berechtigung des Benutzers und des zugehörigen drahtlosen Kommunikationsgerätes erfolgen.

Nach Abschluss dieser Übermittlungen der Autorisierungsnachrichten sowohl an die drahtlose Kommunikationseinrichtung als auch an die Steuereinrichtung in dem Kraftfahrzeug kann zwischen diesen Komponenten eine Verbindung aufgebaut werden und seitens des Kraftfahrzeugs die Autorisierung für den Zugriff der Kommunikationseinrichtung auf das Kraftfahrzeug anhand der nun komplett vorliegenden Autorisierungsnachricht verifiziert werden. Nur wenn die Teile der Autorisierungsnachricht zueinander passen und eine positive Prüfung erfolgt, wird ein Zugriff von der drahtlosen Kommunikationseinrichtung auf das Kraftfahrzeug eingerichtet und zugelassen. Dieser Zugriff kann sich auf Teilfunktionen oder die komplette Funktionalität oder sogar erweiterte Funktion gegenüber dem Funktionen des ID-Gebers erstrecken.

Nach erfolgter positiver Authentifizierung zu dem mobilen Kommunikationsgerät eine eindeutige Kennung in der fahrzeugseitigen Steuereinrichtung hinterlegt und diese mobile Kommunikationseinrichtung als dauerhaft autorisiert gespeichert. Eine solche dauerhafte Autorisierung kann auch mit einem Zeitablauf eingerichtet werden, so dass nach einer gewissen Zeitdauer, z.B. einigen Wochen, die Autorisierung wiederholt oder erneuert werden muss.

Die Generierung der Teile der Autorisierungsnachricht kann durch beliebige Verfahren erfolgen, insbesondere ist jedoch ein bereits erprobtes Sicherungsverfahren für Nachrichtenübermittlungen mit verteilten Schlüsseln einsetzbar. So kann z.B. seitens des Serviceproviders ein Schlüsselpaar generiert werden, was auf unterschiedlichen Wegen und nach Verbindungsaufnahme der Kommunikationseinrichtung mit dem Kraftfahrzeug zusammengeführt wird. Nur wenn dieses Schlüsselpaar eine logische Prüfung besteht, kann von einer berechtigten und nicht korrumpierten Verbindungsaufnahme ausgegangen werden. Es kann sich beispielsweise um ein Schlüsselpaar handeln, wobei eine zu entschlüsselnde Nachricht mit einem der Schlüssel verschlüsselt und zusammen mit diesem Schlüssel übermittelt wird, und nur durch den anderen Schlüssel entschlüsselbar ist, um die Autorisierungsnachricht zu verifizieren (asynchrone Verschlüsselung). Derartige Konzepte sind aus verschiedenen Bereichen der Technik bekannt, und werden beispielsweise im Bereich der Nachrichtenverschlüsselung seit langem eingesetzt.

Ein solches asymmetrisches Verschlüsselungssystem kann insbesondere eingesetzt werden, um einen öffentlichen Schlüssel seitens des Serviceproviders zu erstellen und zusammen mit einer verschlüsselten Authentifizierung an die Kommunikationseinrichtung zu senden und den zugehörigen zweiten, privaten Schlüssel an das Kraftfahrzeug zu senden. Auf diese Weise kann die Kommunikationseinrichtung mit dem öffentlichen Schlüssel verschlüsselte Nachrichten an das Kraftfahrzeug senden, wo diese mit dem privaten Schlüssel entschlüsselt werden. Neben der Authentifizierung kann ein solcher Vorgang auch der Sicherheit der nachfolgenden Kommunikation für Steuerbefehle verwendet werden.

Alternativ kann jedoch auch ein im Kraftfahrzeug hinterlegter und dort ggf. nochmals verschlüsselter geheimer Schlüssel bei der Kraftfahrzeugherstellung hinterlegt werden. Ein solcher geheimer Schlüssel ist dem Kraftfahrzeugsystem bekannt, jedoch auch dem Serviceprovider, welcher über detaillierte Daten über das Kraftfahrzeug verfügt, ähnlich wie ein Fahrzeughersteller über Schlüsseldaten zwecks Nachbestellung von Schlüsseln verfügt. Die Verfügbarkeit der Informationen ist üblicherweise durch eine Blindcodierung geschützt, da die Identifikationskennung des ID-Gebers aber an den Service-Provider gesendet wird, ist dieser zur Auffindung des passenden Schlüssels in der Lage.

Es kann durch den Serviceprovider daher eine mit dem privaten Schlüssel zu entschlüsselnde Botschaft und Autorisierungsmitteilung an das mobile Kommunikationsgerät übermittelt werden sowie eine Autorisierungsnachricht, die ebenfalls mit dem geheimen Schlüssel entschlüsselbar ist und die an das Kraftfahrzeug gesendet wird.

Im Rahmen der Erfindung sind zahlreiche weitere Möglichkeiten gegeben, um die Übertragung einer Autorisierungsnachricht von dem Serviceprovider an die beiden Zielstellen, die Kommunikationseinrichtung einerseits und das Fahrzeug andererseits, abzusichern.

Der Serviceprovider kann außerdem neben den übermittelten Identifikationsdaten des Schlüssels und der Kommunikationseinrichtung weitere Daten berücksichtigen, bevor die entsprechenden Autorisierungsmitteilungen generiert werden. Beispielsweise kann es erforderlich sein, dass sich der Fahrzeughalter persönlich beim Serviceprovider meldet (z.B. durch ein Web-Interface oder ein Telefonanruf), und die Beantragung einer Autorisierung seines Mobilgerätes ankündigt. Nur wenn eine solche Ankündigung vorliegt, kann innerhalb eines Zeitfensters eine Autorisierung vorgenommen werden.

Es ist wesentlich, dass für die Durchführung einer Autorisierung und für die Übermittlung einer entsprechenden Autorisierungsmitteilung an das Kraftfahrzeug die Zwischenschaltung eines Serviceproviders vorgesehen ist, welcher eine vertrauenswürdige Stellung einnimmt und welcher über zusätzliche Daten für das Kraftfahrzeug verfügt. Außerdem werden durch diese Maßnahme die Daten an zentraler Stelle speicherbar hinterlegt, was im Falle einer Aufhebung der Autorisierung, z.B. bei Verlust eines Mobilfunkgerätes, von Vorteil ist.

Gemäß der Erfindung wird die Kommunikation zwischen ID-Geber und drahtloser Kommunikationseinrichtung so gestaltet, dass eine Abfrage der relevanten Daten des ID-Gebers nur anhand einer auf den ID-Geber abgestimmten Kommunikation erfolgen kann. Zwar kann grundsätzlich ein standardisiertes Übermittlungsprotokoll verwendet werden, die Abfrage der Daten auf einer höheren Protokollebene kann jedoch durch die entsprechende Abfragesoftware seitens des Mobilfunkgerätes gemanagt werden. Dadurch kann verhindert werden, dass unerwünschte Zugriffe mit Standardgeräten zu einer Abfrage der relevanten Informationen genutzt werden können.

Vorzugsweise ist die Verbindung zwischen ID-Geber und drahtloser Kommunikationseinrichtung eine Funkverbindung mit kurzer Reichweite, insbesondere eine Verbindung nach dem NFC-Standard.

Der NFC-Standard (Near Field Communication) ist ein kurzreichweitiger Übertragungsstandard für Daten. Die Reichweite der NFC-Technik beträgt nur einige Zentimeter und stellt dadurch sicher, dass keine unerwünschte Abfrage eines Kraftfahrzeugsschlüssels erfolgen kann, z.B. wenn ein Gesprächspartner oder ein Restaurantnachbar einen entsprechenden Schlüssel mit sich führt. Im Übrigen kann es gemäß der Erfindung ohnehin vorgesehen sein, dass auf Seiten des ID-Gebers eine Bedienungseingabe erfolgen muss, um überhaupt eine Kommunikation zwischen ID-Geber und drahtlosem Kommunikationsgerät zu ermöglichen. Der entsprechend mit einer NFC-Schaltung ausgestattete ID-Geber wird in die Nähe eines NFC-fähigen Mobilkommunikationsgerätes gebracht und eine Überragung der Identifikationsdaten vom ID-Geber auf das Mobilgerät kann erfolgen. Es sind bereits Telefongeräte am Markt erhältlich, welche eine NFC-Fähigkeit aufweisen. Diese Art von Funktechnik ist bewährt und etabliert und für den erfindungsgemäßen Gebrauch der Übertragung von Identifikationsmeldungen bestens geeignet.

Im Übrigen kann das gesamte Konzept und die Infrastruktur der NFC Technik genutzt werden, um die Erfindung zu implementieren. Deren Standards können auch für die Erfindung verwendet werden. Allerdings ist die Erfindung auch mit unabhängigen Strukturen und proprietären Standards oder anderen etablierten Standards einsetzbar.

In einer Weiterbildung der Erfindung wird die Verbindung zwischen der drahtlosen Kommunikationseinrichtung und der Steuereinrichtung des Fahrzeuges ebenfalls eine Verbindung kurzer Reichweite, hier jedoch insbesondere eine Verbindung nach dem Bluetooth-Standard aufgebaut. Auch diese Verbindungsart ist eine bewährte und etablierte Verbindungstechnik, über welche bereits Kraftfahrzeuge in Standard- oder Sonderausstattung verfügen. Die Bluetooth-Verbindung hat eine gegenüber der NFC-Funktechnik vergrößerter Reichweite und erlaubt die komfortable Anbindung des Mobilkommunikationsgerätes mit dem Kraftfahrzeug, um die endgültige Autorisierung durchzuführen.

Vorzugsweise wird die Autorisierung nur erfolgreich durchgeführt, wenn das Verfahren mehrmals, mit einem vorgegebenen zeitlichen Mindestabstand wiederholt wird. Es ist zum Beispiel zur Erhöhung der Sicherheit sinnvoll, wenn die Autorisierungsanfrage mit einem Mindestabstand von einigen Stunden oder Tagen mit identischen Geräten wiederholt werden muss. Dadurch kann ausgeschlossen werden, dass ein kurzzeitig in den Besitz des ID-Gebers gelangter Unberechtigter die Autorisierung durchführen kann. Innerhalb des vorgeschriebenen zeitlichen Abstandes ist der Verlust des ID-Gebers nämlich höchstwahrscheinlich aufgefallen und der Verlust gemeldet, so dass eine erfolgreiche Autorisierung unterbunden werden kann.

Es ist besonders vorteilhaft, wenn Teile der Autorisierungsnachricht von dem Serviceprovider an die Steuereinrichtung in dem Kraftfahrzeug über ein öffentliches Mobilfunknetz übertragen werden. Viele Kraftfahrzeuge verfügen bereits über mobilfunknetztaugliche Kommunikationseinrichtungen, z.B. GSM/GPRS-Einrichtungen. Diese Kommunikationswege können für den Service-provider verwendet werden, um die Autorisationsnachricht an das Kraftfahrzeug zu übermitteln. Es werden bestehende Strukturen verwendet, um eine besonders komfortable Übermittlung einzurichten.

In einer alternativen Gestaltung wird die Autorisierungsnachricht an die Steuereinrichtung in dem Kraftfahrzeug unter Verwendung eines mit der Steuereinrichtung koppelbaren Servicegerätes übertragen. Derartige Servicegeräte können z.B. an Stützpunkten angebracht sein, z.B. Tankstellen oder Kfz-Werkstätten oder Autohändlern, welche die Ankopplung an das Fahrzeug über die ohnehin vorhandene Serviceschnittstelle durchführen. Der Stützpunkt ruft die zum Fahrzeug gehörigen vom Serviceprovider bereitgestellten Teile der Autorisierungsnachricht ab oder ihm wurden diese Teile bereits auf Kundenwahl im Voraus übermittelt. Über die Serviceschnittstelle an dem Kraftfahrzeug kann dann mit dem Servicegerät die entsprechende Autorisierungsnachricht übermittelt werden. Es ist zu beachten, dass dies allein noch keine Autorisierung der Kommunikationseinrichtung bedeutet. Mit dem Servicegerät allein kann also keinesfalls ein widerrechtlicher Zugriff auf das Kraftfahrzeug, sozusagen eine Schlüsselkopie erzeugt werden. Es ist stattdessen dafür das Zusammenspiel der gesamten Komponenten, insbesondere der Einschaltung des Serviceproviders erforderlich.

In einer bevorzugten Ausführungsform der Erfindung wird auf dem drahtlosen Mobilkommunikationsgerät eine Anwendung von dem Serviceprovider abgerufen oder hinterlegt, welche den gesamten Ablauf der Verifizierung und der Autorisierungskommunikation abwickelt. Eine solche Anwendung kann von dem Serviceprovider selbst entwickelt oder angeboten werden und kann z.B. auch individualisiert nach Anforderung durch den Benutzer zielgerichtet auf die Kommunikation mit nur einem ID-Geber angepasst sein.

Fordert also im Vorhinein ein Benutzer des Kraftfahrzeuges mit seinem Namen und seiner Fahrzeugkennung (z.B. Fahrgestellnummer) beim Serviceprovider die Anwendung an, kann diese angepasst auf den speziellen ID-Geber erzeugt und an das drahtlose Kommunikationsgerät des Benutzers übermittelt werden. Auf diese Weise kann verhindert werden, dass mit einer allgemein anwendbaren Anwendung Kommunikationen mit mehreren Schlüsseln aufgenommen werden. Zu jedem Schlüssel würde eine spezielle Anwendung erzeugt und übermittelt.

In einer Weiterbildung der Erfindung wird vor dem Aufbauen einer Verbindung über ein öffentliches Kommunikationsnetzwerk zwischen der drahtlosen Kommunikationseinrichtung und einem Service Provider ein Master-Key als weitere Identifikationskennung in der Kommunikationseinrichtung gespeichert und diese wird zusammen mit der ersten Identifikationskennung und der zweiten Identifikationskennung von der drahtlosen Kommunikationseinrichtung an den Service Provider übermittelt.

Ein Master-Key, welcher getrennt von dem Fahrzeugschlüssel an einem Sicheren Ort hinterlegt werden kann, erhöht die Sicherheit des Verfahrens. Der Master Key wird, ähnlich einer PUK bei einer Mobiltelefonkarte, im Alltagsgebrauch des Fahrzeuges nicht mitgeführt sondern nur für außergewöhnliche Autorisierungsvorgänge benötigt. Eine solche weitere Kennung verhindert, dass durch unrechtmäßige Aneignung des Schlüssels die Gefahr der Anfertigung einer Kopie besteht. Der Service Provider stellt die Autorisierungsnachricht nämlich nur aus, wenn auch der Master-Key, der dem Service-Provider ebenso wie die Identifikation des Schlüssels bekannt ist, zutreffend übermittelt wird.

Vorzugsweise wird bei dem Verfahren außerdem überprüft, ob das Aufbauen der Verbindung zwischen der drahtlosen Kommunikationseinrichtung und der Steuereinrichtung des Kraftfahrzeugs innerhalb einer vorgegebenen Zeitspanne ab dem Übermitteln der Identifikationsdaten von der drahtlosen Kommunikationseinrichtung an den Service Provider erfolgt.

Die Einbeziehung der Zeit als begrenzenden Parameter in das Verfahren erhöht die Sicherheit. Die Vorgegebene Zeitspanne kann in Abhängigkeit von der Zeit für die Übertragung der Daten und die Zeit für die Rückübertragung der Autorisierungsnachricht gewählt werden. Werden die Daten unmittelbar über Funknetze an die Kommunikationseinrichtung und das Fahrzeug gesendet, so kann die erlaubte Gesamtzeit von der Beantragung der Zugangsberechtigung für das mobile Kommunikationsgerät bis zur Paarung von Kommunikationsgerät und Fahrzeug auf einige Sekunden bis zu einigen Minuten begrenzt werden. Danach verfällt die Berechtigung und muss neu angefordert werden. Dieser Vorgang verhindert, dass Schlüsselinformationen auf Vorrat aus Schlüsseln ausgelesen werden können und der Zugang zum Fahrzeug deutlich verzögert erfolgt.

Es ist in diesem Zusammenhang besonders bevorzugt, wenn die Autorisierungsnachricht eine Zeitkennung enthält, welche die Erzeugung der Autorisierungsnachricht oder die Gültigkeitsdauer der Autorisierungsnachricht angibt.

Anhand der Zeitkennung kann die Gültigkeit oder der Verfall der Autorisierung nachvollzogen werden. Anhand der Zeitkennung kann außerdem eine zeitliche Manipulation erkannt werden, wenn ein Abgleich mit einer Systemzeit des Fahrzeugs einerseits und der Kommunikationseinrichtung andererseits erfolgt.

Das erfindungsgemäße Verfahren wird nun anhand der beiliegenden Zeichnungen näher erläutert.
Figur 1 zeigt einen schematischen Überblick über das Zusammenwirken der einzelnen Komponenten bei Durchführung des Verfahrens gemäß einem ersten Ausführungsbeispiel.
Figur 2 zeigt ein Ablaufschema des Verfahrens gemäß dem ersten Ausführungsbeispiel.

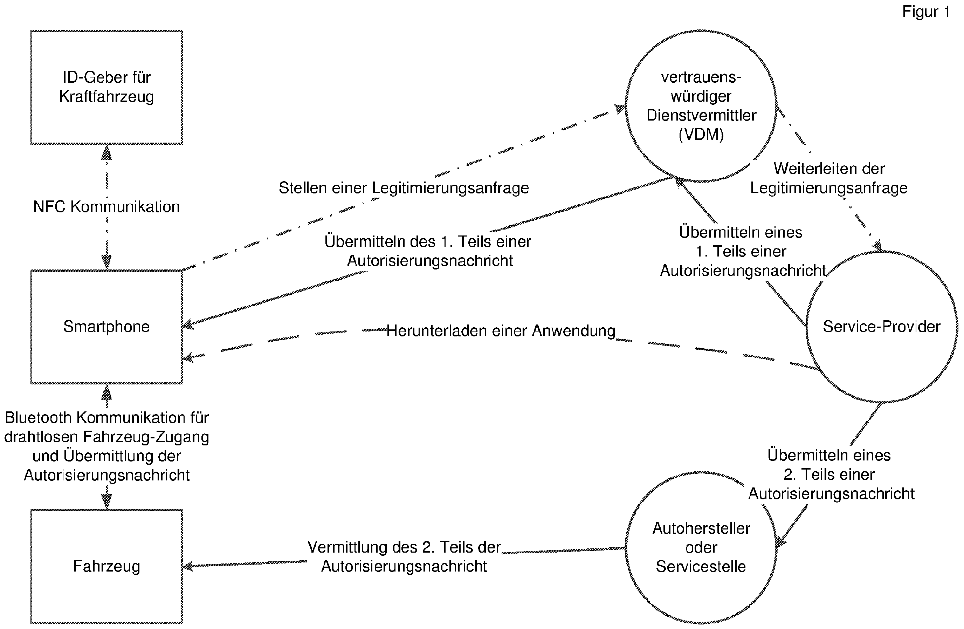

In Figur 1 sind die am Verfahren teilnehmenden Einrichtungen und ihre Wechselwirkung dargestellt. Ein ID-Geber 10 für Kraftfahrzeuge, ein Smartphone 20 und ein Fahrzeug 30 bilden körperliche Funktionseinheiten des Verfahrens. Die durch Kreise dargestellten Verfahrensteilnehmer sind der vertrauenswürdige Dienstvermittler (VDM) 40, der Serviceprovider (SP) 50 und der Fahrzeughersteller bzw. dessen Servicestelle 60. Diese letztgenannten Einrichtungen können komplexe funktionale Systeme symbolisieren, die auch über weite Flächenbereiche und Funktionsbereiche verteilt sein können.

Der vertrauenswürdige Dienstvermittler (VDM) übernimmt die Verwaltung der Kontaktdaten zwischen Nutzer und Service Provider. Dabei kann der VDM eine gesicherte Verwaltung und Bereitstellung von Anwendungen bieten, welche von dem Service Provider herausgegeben wurden.

Zu diesem Zweck kann der VDM mit den Betreibern von Kommunikationsnetzen kooperieren und er erfüllt besondere Anforderungen hinsichtlich Zertifizierung und Vertrauenswürdigkeit.

Die körperlichen Verfahrensteilnehmer stehen wechselweise in Kommunikationsverbindungen. So kann zwischen dem ID-Geber 10 und dem Smartphone 20 eine NFC-Kommunikation 15 aufgebaut werden. Zwischen Smartphone 20 und Fahrzeug 30 kann eine Bluetooth-Verbindung 25 aufgebaut werden.

Diese Kommunikationswege sind kurzreichweitige Funkkommunikationen. Dem gegenüber kann das Smartphone zum VDM und/oder zum SP eine Kommunikationsverbindung über Kommunikationsnetzwerke großer Reichweite aufbauen. Dazu kommen insbesondere die Mobilfunknetze oder das Internet in Frage.

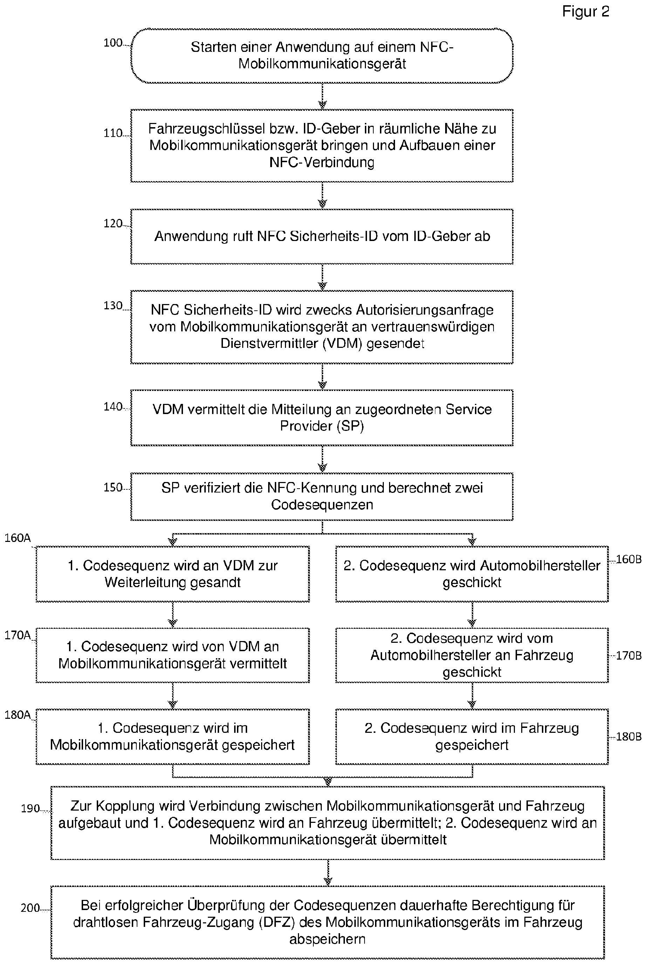

In Figur 2 ist als Ablaufdiagramm das Zusammenwirken der Einheiten aus Figur 1 beschrieben.

Bevor das Verfahren durchführbar ist, wird eine entsprechende Anwendung zur Abwicklung der Kommunikation des Smartphones 15 mit dem ID-Geber 10 und den weiteren Kommunikationsanfragen auf das Smartphone 10 geladen. Dies kann durch ein Abrufen der entsprechenden Applikation aus einer verfügbaren Online-Datenbank geschehen oder durch Kopplung des Smartphones 20 mit einem entsprechenden Datenträger, welcher die Anwendung gespeichert hat. Die Anwendung kann sowohl auf das Smartphone als auch auf den speziellen Fahrzeugtyp oder sogar den speziellen ID-Geber angepasst sein.

In Schritt 100 der Figur 2 wird diese Anwendung auf dem Smartphone 20 gestartet. Der ID-Geber 10 und das Smartphone 20 werden in räumlicher Nähe zueinander gebracht und eine NFC-Kommunikation 15 wird in Schritt 110 aufgebaut. Der Ablauf der Anwendung auf dem Smartphone 20 bewirkt, dass Identifikationskennungen von dem ID-Geber 10 über die NFC-Verbindung 15 an das Smartphone 20 übermittelt werden. Dies geschieht in dem Schritt 120 in Figur 2. Diese Daten werden sogleich im Smartphone 20 auf Plausibilität überprüft werden, um Übertragungsfehler auszuschließen und die Kompatibilität des Smartphones und der entsprechenden Anwendung auf dem Smartphone mit dem ID-Geber 10 zu prüfen.

In Schritt 130 wird die Identifikationskennung, die vom ID-Geber 10 an das Smartphone 20 übermittelt wurde, von dem Smartphone 20 über ein öffentliches Kommunikationsnetzwerk an einen vertrauenswürdigen Dienstvermittler (VDM) 40 gesendet. Die Funktion eines VDM besteht darin, die Sicherheit bei der Bereitstellung von Diensten unter Verwendung global nutzbarer Netze zur Verfügung zu stellen. Derartige Funktionen von VDMs sind aus Online-Bezahlvorgängen bekannt. Der VDM bildet eine Art Übergabepunkt zwischen dem eigentlichen Serviceprovider und einem Endbenutzer.

Der VDM 40 vermittelt in Schritt 140 die Anfrage des Smartphones 20 an den SP 50. Dieser SP verifiziert schließlich die übermittelten Daten, insbesondere die übermittelten Identifikationskennungen. Anhand der einzigartigen Identifikationskennung des Schlüssels bzw. ID-Gebers 10 kann der Serviceprovider 50 auf die entsprechenden Fahrzeugdaten des Fahrzeugs 30 zurückgreifen und erzeugt eine mehrzeilige Codesequenz in Schritt 150, die sowohl auf das Fahrzeug 30 als auch das Smartphone 20 angepasst ist und die Daten des ID-Gebers 10 berücksichtigt.

Auf verschiedenen Wegen wird nun jeweils ein Teil der Codesequenz an die zu koppelnden Geräte zurückgeleitet. Ein erster Teil der Codesequenz wird wiederum über den VDM 40 von dem SP 50 an das Smartphone 20 übermittelt. Dies geschieht in den Schritten 160A, 170A und 180A. Die erste Codesequenz wird im Zielgerät, dem Smartphone 20, gespeichert.

Eine zweite Codesequenz wird in Schritt 160B von dem SP 50 an den Automobilhersteller 60 geschickt, basierend auf den Daten, die der SP 50 anhand der Identifikationskennung für das Fahrzeug 30 ermittelt hat. In Schritt 170B übermittelt der Automobilhersteller 60 die zweite Codesequenz an das Fahrzeug 30. Dies kann sowohl bei dem Aufenthalt des Fahrzeugs an einer Servicestelle durch Ankopplung eines entsprechenden Servicegerätes geschehen, oder durch eine drahtlose Übermittlung über ein öffentliches Kommunikationsnetzwerk, sofern das Fahrzeug 30 über entsprechende Kommunikationsmittel verfügt.

In Schritt 180B wird die zweite Codesequenz im Fahrzeug gespeichert.

Nach Abfolge dieser Schritte ist im Smartphone 20 die erste Codesequenz gespeichert, während im Fahrzeug 30 die zweite Codesequenz gespeichert ist. In dem nun folgenden Kopplungsvorgang 190 zwischen Smartphone 20 und Fahrzeug 30 werden die Codesequenzen übertragen und verifiziert und die Kopplungsfreigabe 200 bei positiver Verifizierung der Codesequenzen erzeugt.

Die dabei erforderliche Kommunikation zwischen Smartphone und Fahrzeug kann kabelgebunden stattfinden, es kann jedoch auch eine Bluetooth-Kommunikation zur drahtlosen Übertragung eingeleitet werden. Nach erfolgreicher Kopplung der beiden Komponenten Smartphone und Fahrzeug 30 wird die Zugangsberechtigung des Smartphone in dem Kraftfahrzeug in einer Steuereinrichtung gespeichert (Schritt 200). Im Folgenden kann das Smartphone auf die freigegebenen Funktionen des Fahrzeuges auch gänzlich ohne Vorhandensein des ID-Gebers zugreifen.

Das erfindungsgemäße Verfahren kann in seiner Sicherheit noch weiter erhöht werden, wenn vor erfolgreicher Durchführung einer Kopplung die Bekanntgabe der Zugehörigkeit des Smartphones 20 zu dem legitimen Besitzer des Kraftfahrzeugs 30 anzumelden ist. Dazu kann der Besitzer beispielsweise durch einen Anruf mit dem Smartphone 20 oder Absenden einer SMS von dem Smartphone 20 an eine vorgegebene Rufnummer sein Smartphone als legitimes Kommunikationsgerät voranmelden, wenn er von diesem Smartphone aus eine nur dem Besitzer zugängliche Information übermitteln. Dies kann beispielsweise eine Information oder Kennung sein, die vor Durchführung des Verfahrens via Bluetooth vom Fahrzeug an das Smartphone unter Kommunikationsleitung der Anwendung übermittelt wird, wobei zu diesem Zeitpunkt im Fahrzeug der legitime ID-Geber in das Zündschloss des Kraftfahrzeugs eingesteckt sein muss. In diesem Zustand kann die Steuereinrichtung des Kraftfahrzeuges eine eindeutige Kennung über die Bluetooth-Verbindung an das Smartphone übermitteln, welche bei Durchführung des erfindungsgemäßen Verfahrens als zusätzliche Identifikationskennung an den SP gesendet wird. Dadurch wird sichergestellt, dass das Smartphone tatsächlich in einer vom Benutzer des Fahrzeuges kontrollierten Situation als legitimes Mittel für die Durchführung des entsprechenden Autorisierungsverfahrens gemäß der Erfindung berechtigt ist.

## Patentansprüche

1. Verfahren zum Bereitstellen eines drahtlosen Fahrzeugzugangs zu einem Kraftfahrzeug, mit den Schritten:
Aufbauen (110) einer Verbindung zwischen einem dem Kraftfahrzeug zugeordneten Fahrzeugschlüssel und einer drahtlosen Kommunikationseinrichtung,
Übermittlung (120) einer in dem Fahrzeugschlüssel gespeicherten ersten eindeutigen Identifikationskennung vom Fahrzeugschlüssel an die Kommunikationseinrichtung,
Aufbauen einer Verbindung über ein öffentliches Kommunikationsnetzwerk zwischen der drahtlosen Kommunikationseinrichtung und einem Service Provider und
Übermitteln (130) der ersten Identifikationskennung des Fahrzeugschlüssels von der drahtlosen Kommunikationseinrichtung an den Service Provider, zusammen mit einer zweiten Identifikationskennung, welche die drahtlose Kommunikationseinrichtung identifiziert,
Erzeugen (150) einer mehrteiligen Autorisierungsnachricht durch den Service Provider,
Übermitteln (160A, 170A) von Teilen der Autorisierungsnachricht von dem Service Provider an die drahtlose Kommunikationseinrichtung,
Übermitteln (160B, 170B) von Teilen der Autorisierungsnachricht von dem Service-Provider an eine Steuereinrichtung in dem Kraftfahrzeug,
Aufbauen (190) einer Verbindung zwischen der drahtlosen Kommunikationseinrichtung und der Steuereinrichtung des Kraftfahrzeugs und Prüfen einer Zugriffsautorisierung der Kommunikationseinrichtung anhand der Teile der Autorisierungsnachricht aus dem Kraftfahrzeug und der Kommunikationseinrichtung, wobei bei positiver Authentifizierung der Zugriffsautorisierung die Kommunikationseinrichtung anhand einer eindeutigen Kennung als berechtigte Zugangseinrichtung in der Steuereinrichtung des Kraftfahrzeugs als dauerhaft autorisiert gespeichert (200) wird.

2. Verfahren nach Anspruch 1, wobei die Verbindung zwischen Fahrzeugschlüssel und drahtloser Kommunikationseinrichtung eine Funkverbindung kurzer Reichweite, insbesondere eine Verbindung nach NFC-Standard ist.

3. Verfahren nach Anspruch 1 oder 2, wobei die Verbindung zwischen drahtloser Kommunikationseinrichtung und der Steuereinrichtung des Fahrzeugs eine Funkverbindung kurzer Reichweite, insbesondere eine Verbindung nach dem Bluetooth-Standard ist.

4. Verfahren nach einem der Ansprüche 1 bis 3, wobei die Teile der Autorisierungsnachricht an die Steuereinrichtung in dem Kraftfahrzeug über ein öffentliches Mobilfunknetz übertragen werden.

5. Verfahren nach einem der Ansprüche 1 bis 3, wobei die Teile der Autorisierungsnachricht an die Steuereinrichtung in dem Kraftfahrzeug unter Verwendung eines mit der Steuereinrichtung koppelbaren Servicegeräts übertragen werden.

6. Verfahren nach einem der vorstehenden Ansprüche, wobei vom Service Provider für ein Management der Verbindung zwischen dem Fahrzeugschlüssel und der drahtlosen Kommunikationseinrichtung eine ausführbare Anwendung abrufbar ist, welche auf die drahtlose Kommunikationseinrichtung übertragbar ist.

7. Verfahren nach Anspruch 1, wobei die Autorisierungsnachricht zusätzlich unter Einbeziehung einer anhand der Identifikationskennung des Fahrzeugschlüssels ermittelten Fahrzeugidentifikation bestimmt wird.

8. Verfahren nach einem der vorstehenden Ansprüche, wobei vor dem Aufbauen einer Verbindung über ein öffentliches Kommunikationsnetzwerk zwischen der drahtlosen Kommunikationseinrichtung und einem Service Provider ein Master-Key als weitere Identifikationskennung in der Kommunikationseinrichtung gespeichert wird und diese
zusammen mit der ersten Identifikationskennung und der zweiten Identifikationskennung von der drahtlosen Kommunikationseinrichtung an den Service Provider übermittelt wird.

9. Verfahren nach einem der vorstehenden Ansprüche, wobei überprüft wird, ob das Aufbauen der Verbindung zwischen der drahtlosen Kommunikationseinrichtung und der Steuereinrichtung des Kraftfahrzeugs innerhalb einer vorgegebenen Zeitspanne ab dem Übermitteln der Identifikationsdaten von der drahtlosen Kommunikationseinrichtung an den Service Provider erfolgt.

10. Verfahren nach Anspruch 9, wobei die Autorisierungsnachricht eine Zeitkennung enthält, welche die Erzeugung der Autorisierungsnachricht oder die Gültigkeitsdauer der Autorisierungsnachricht angibt.

## Claims

1. Method for providing wireless access to a motor vehicle, comprising the steps of:
establishing (110) a connection between the vehicle key assigned to the motor vehicle and a wireless communication device,
transmitting (120) a first unique identifier stored in the vehicle key from the vehicle key to the communication device,
establishing a connection between the wireless communication device and a service provider via a public communication network, and
transmitting (130) the first identifier of the vehicle key from the wireless communication device to the service provider together with a second identifier which identifies the wireless communication device,
generating (150) a multipart authorisation message by the service provider,
transmitting (160A, 170A) parts of the authorisation message from the service provider to the wireless communication device,
transmitting (160B, 170B) parts of the authorisation message from the service provider to a control apparatus in the motor vehicle,
establishing (190) a connection between the wireless communication device and the motor vehicle control apparatus and testing an access authorisation of the communication device on the basis of the parts of the authorisation message, wherein in the case of positive authentication of the access authorisation the communication device is memorised (200) in the motor vehicle control apparatus as permanently authorised on the basis of a unique identifier as an authorised access device.

2. Method according to claim 1, wherein the connection between the vehicle key and the wireless communication device is a short-range wireless connection, particularly a connection conforming to the NFC standard.

3. Method according to claim 1 or 2, wherein the connection between the wireless communication device and the vehicle control apparatus is a short-range wireless connection, particularly a connection conforming to the Bluetooth standard.

4. Method according to any one of claims 1 to 3, wherein the parts of the authorisation message are transmitted to the control apparatus in the vehicle via a public wireless network.

5. Method according to any one of claims 1 to 3, wherein the parts of the authorisation message are transmitted to the control apparatus in the vehicle using a service device that can be coupled to the control apparatus.

6. Method according to any one of the preceding claims, wherein an executable application which is transmittable to the wireless communication device can be called by the service provider for managing the connection between the vehicle key and the wireless communication device.

7. Method according to claim 1, wherein the authorisation message is determined by additionally including a motor vehicle identification which is calculated on the basis of an identifier of the motor vehicle key.

8. Method according to any one of the preceding claims, wherein a master key is stored in the memory of the communication device as a further identifier before a connection is established via a public communication network between the wireless communication device and a service provider, and is transmitted to the service provider by the wireless communication device together with the first identifier and the second identifier.

9. Method according to any one of the preceding claims, wherein a check is carried out to determine whether the connection between the wireless communication device and the motor vehicle control apparatus is established within a prescribed timeframe starting when the identification data is transmitted to the service provider by the wireless communication device.

10. Method according to claim 9, wherein the authorisation message includes a time stamp which indicates the generation of the authorisation message or the validity period of the authorisation message.

## Revendications

1. Procédé de fourniture d'un accès sans fil à un véhicule pour un véhicule automobile avec les étapes suivantes :
établissement (110) d'une liaison entre une clé de véhicule attribuée à un véhicule automobile et un système de communication sans fil,
transmission (120) d'un premier code d'identification défini de la clé du véhicule mémorisé dans la clé du véhicule au système de communication,
établissement d'une liaison par un réseau de communication public entre le système de communication sans fil et un fournisseur de service et
transmission (130) du premier code d'identification de la clé du véhicule du système de communication sans fil au fournisseur de service, en même temps qu'un deuxième code d'identification, lequel identifie le système de communication sans fil,
production (150) d'une information d'autorisation multiple par le fournisseur de service,
transmission (160A, 170A) de parties de l'information d'autorisation du fournisseur de service au système de communication sans fil,
transmission (160B, 170B) de parties de l'information d'autorisation du fournisseur de service à un dispositif de commande dans le véhicule automobile,
établissement (190) d'une liaison entre le système de communication sans fil et le dispositif de commande du véhicule automobile et vérification d'une autorisation d'accès du système de communication à l'aide des parties de l'information d'autorisation depuis le véhicule automobile et le système de communication, le système de communication étant mémorisé (200) dans le dispositif de commande du véhicule automobile comme autorisé en permanence lors d'une authentification positive de l'autorisation d'accès à l'aide d'un code défini en tant que système d'accès autorisé.

2. Procédé selon la revendication 1, la liaison entre la clé du véhicule et le système de communication sans fil étant une liaison radio de courte portée, notamment une liaison selon la norme de Communication en Champ Proche (CCP).

3. Procédé selon la revendication 1 ou 2, la liaison entre le système de communication sans fil et le dispositif de commande du véhicule est une liaison radio de courte portée, notamment une liaison selon la norme Bluetooth.

4. Procédé selon l'une quelconque des revendications 1 à 3, les parties de l'information d'autorisation étant transmises au dispositif de commande dans le véhicule automobile par un réseau de radiotéléphonie public.

5. Procédé selon l'une quelconque des revendications 1 à 3, les parties de l'information d'autorisation étant transmises au dispositif de commande dans le véhicule automobile en utilisant un appareil de service pouvant être couplé au dispositif de commande.

6. Procédé selon l'une quelconque des revendications précédentes, une application exécutable pouvant être appelée par le fournisseur de service pour une gestion de la liaison entre la clé de véhicule et le système de communication sans fil, laquelle peut être transmise au système de communication sans fil.

7. Procédé selon la revendication 1, l'information d'autorisation étant déterminée en plus en faisant appel à une identification de véhicule déterminée à l'aide du code d'identification de la clé du véhicule.

8. Procédé selon l'une quelconque des revendications précédentes, une clé passe-partout étant mémorisée dans le système de communication en tant qu'autre code d'identification avant l'établissement d'une liaison par un réseau de communication public entre le système de communication sans fil et un fournisseur de service et celle-ci étant transmise par le système de communication sans fil au fournisseur de service avec le premier code d'identification et le deuxième code d'identification.

9. Procédé selon l'une quelconque des revendications précédentes, vérification étant faite que l'établissement de la liaison entre le système de communication sans fil et le dispositif de commande du véhicule automobile a lieu dans l'espace d'un laps de temps prédéfini à partir de la transmission des données d'identification du système de communication sans fil au fournisseur de service.

10. Procédé selon la revendication 9, l'information d'autorisation contenant un code de temps, lequel indique la production de l'information d'autorisation ou la durée de validité de l'information d'autorisation.
